# EUROPEAN PATENT APPLICATION

(11) **EP 1 378 423 A2**
(43) Date of publication of application: **07.01.2004**
(21) Application number: 03012220.4
(22) Date of filing: 06.06.2003
(51) Int. Cl.: B62D 33/02

(54) **Locking device for detachable stakes for supporting the canopy on the body of trucks, trailers or the like**

(30) Priority: 03.07.2002 IT BO20020429
(71) Applicant: Pastore & Lombardi S.r.l., 40057 Cadriano di Granarolo Emilia (Bologna) (IT)
(72) Inventor: Hilbe, Riccardo, 40125 Bologna (IT)
(74) Representative: Modiano, Guido, Dr.-Ing.

(57) **Abstract**

A locking device for detachable stakes for supporting the canopy on the body of trucks, trailers or the like, which is rigidly coupled to the base of the stake (2) and comprises a bolt (4) that can slide vertically between a lower position for locking the stake (2) in which it is inserted in a respective pocket (5) that protrudes from the chassis of the vehicle and an upper release position in which it is extracted from the pocket (5) and allows the removal of said stake (2); the bolt (4) is associated, with the interposition of elastic means (6), with a manually operated lever system (7) for the translational motion of the bolt (4) between the lower position and the upper position, the lever system (7) assuming, when the bolt (4) is in the lower position, a stable upper fastening configuration that is ensured by the elastic means (6).

## Description

The present invention relates to a locking device for detachable stakes for supporting the canopy on the body of trucks, trailers or the like.

The canopy for covering and protecting the body of trucks or trailers is usually supported by a plurality of detachable stakes, which are distributed along the sides and are often associated with horizontal connecting crossmembers. The stakes perform the double task of keeping the structure of the roof securely fixed to the body and of preventing the loaded goods from moving laterally uncontrollably, and at the same time can be removed to allow loading and unloading of said body also from the sides.

Some types of stake are widely used which can be coupled to the frame of the body in an upward region and can be fixed to the vehicle chassis in a downward region: in particular, the stakes are usually provided, at their base, with a locking device that allows to operate a bolt that can be inserted in a pocket, which is monolithic with the chassis, and protrudes therefrom.

Known kinds of locking devices, which are operated manually, generally have an external actuation lever which, in the condition in which the stake is locked and therefore the bolt is inserted in the pocket, must be kept in the fastened position by appropriately provided retention means in order to avoid the risk of spontaneous opening; such means must be deactivated whenever it is necessary to move or remove the stake from the body. This entails constructive and functional complications of the stake, which affect its overall weight and therefore its ease of handling during the loading and unloading of the body; moreover, the rather repetitive operations for removing or fixing the stake accordingly require an excessive expenditure of time and are too laborious.

Moreover, the presence of the retention means makes it necessary to provide large front openings on the stake so that such means can be accessed by the operators: those openings cause the deposition and accumulation of dirt and impurities internally, which can compromise the correct use of the device, and reduce the strength of the stake, which therefore must be made heavier and strengthened.

The aim of the present invention is to obviate the cited drawbacks, by providing a locking device for stakes, that are detachable from the body of the truck, which does not use means for retaining the actuation lever in order to keep it in the fastened position.

Within this aim, an object of the present invention is to provide a locking device that is lightweight and easy to handle and can also be operated rapidly and easily.

Another object of the present invention is to provide a locking device that can be protected from the deposition and accumulation of dirt and impurities inside it.

A further object of the present invention is to provide a stable coupling between the bolt and the pocket, i.e., to ensure correct insertion of said bolt, indicating any malfunctions.

A still further object of the present invention is to provide a structure that is simple, relatively easy to provide in practice, safe in use, effective in operation, and relatively low in cost.

This aim and these and other objects that will become better apparent hereinafter are achieved by the present locking device for detachable stakes for supporting the canopy on the body of trucks, trailers or the like, which is rigidly coupled to the base of the stake and comprises a bolt that can slide vertically between a lower position for locking the stake in which it is inserted in a respective pocket that protrudes from the chassis of the vehicle and an upper release position in which it is extracted from said pocket and allows the removal of said stake, characterized in that said bolt is associated, with the interposition of elastic means, with a manually operated lever system for the translational motion of said bolt between said lower position and said upper position, said lever system assuming, when said bolt is in said lower position, a stable upper fastening configuration that is ensured by said elastic means.

Further features of the invention will become better apparent from the detailed description of a preferred but not exclusive embodiment of a locking device for detachable stakes for supporting the canopy on the body of trucks, trailers or the like according to the invention, illustrated by way of non-limitative example in the accompanying drawings, wherein:

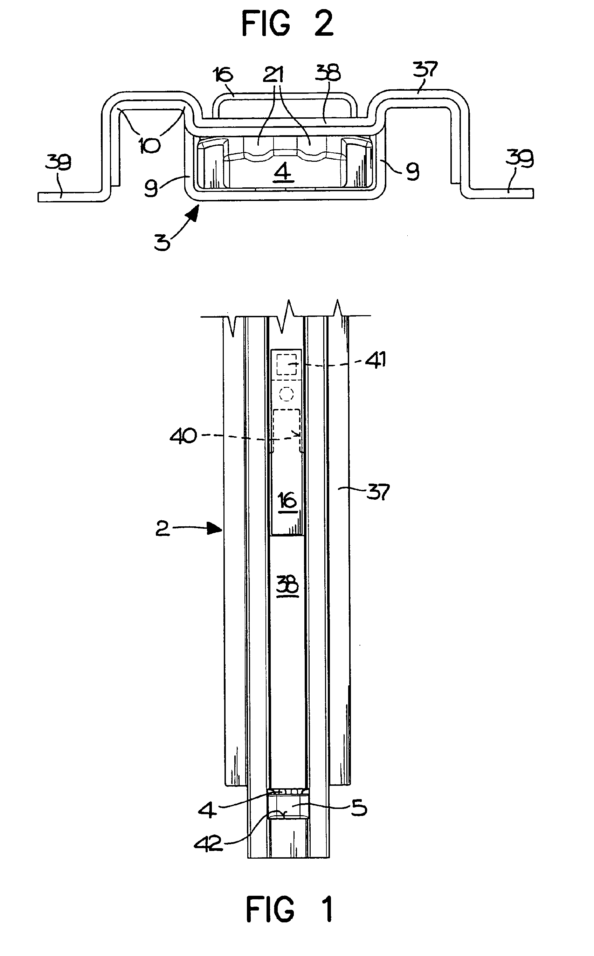

Figure 1 is a front detail view of the detachable stake with locking device according to the invention, fastened onto the pocket of the body;
Figure 2 is a bottom view of the stake with the same locking device;

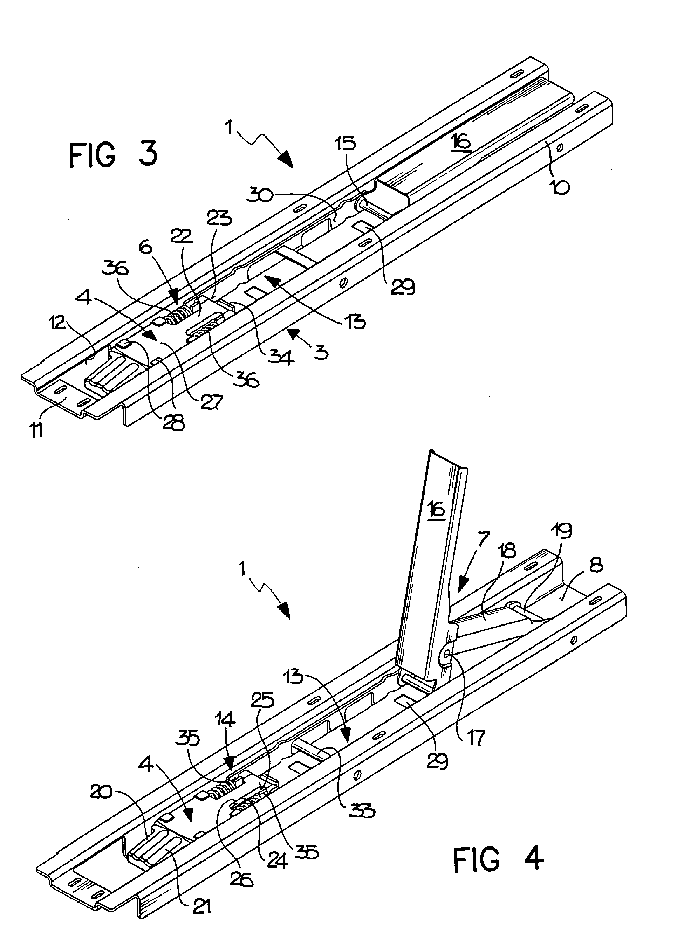

Figure 3 is a perspective view of the locking device with the bolt in the lower position;
Figure 4 is a perspective view of the locking device with the bolt in the upper position;

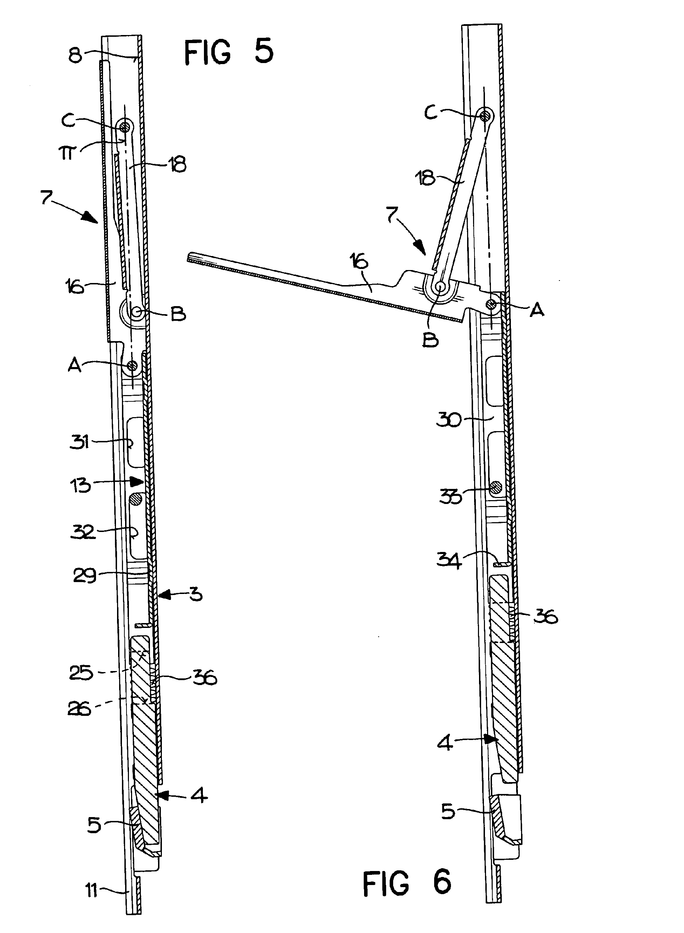

Figure 5 is a partially sectional side elevation view of the locking device with the bolt in the lower position;
Figure 6 is a partially sectional side elevation view of the locking device with the bolt in the upper position.

With reference to the figures, the reference numeral 1 generally designates a locking device for detachable stakes for supporting the canopy on the body of trucks, trailers or the like according to the invention.

The device is rigidly coupled to the base of a stake 2, which preferably hangs, at its top, from the upper frame of the body of the truck, in order to anchor it to the chassis and allow its easy removal during loading operations; the stakes of a same body are arranged so that they are substantially equidistant in order to obtain an effective and uniform fixing of the canopy.

The device, accommodated in a box-like seat 3, comprises a bolt 4, which can slide vertically between a lower position for locking the stake in which it is inserted in a respective pocket 5 that protrudes from the chassis, to an upper release position in which it is extracted from the pocket 5 and allows rapid removal of said stake 2.

According to the invention, the bolt 4 is associated, with elastic means 6 interposed, with a manually operated lever system 7 for the translational motion of the bolt 4 between the lower position and the upper position; the lever system 7 assumes, when the bolt 4 is in the lower position for insertion in the pocket 5, an upper stable fastened configuration that is ensured by the force applied by the elastic means 6.

The box-like seat 3 has a transverse cross-section that is substantially shaped like a letter C, whose back forms a sliding guiding bottom 8 for the bolt 4 and whose sides 9 are folded so as to form right-angled edges 10 in order to give strength and rigidity. The lower end portion 11 of the box-like seat 3 is affected by a substantially rectangular opening 12 which allows, when the stake 2 is locked on the body, the passage of the pocket 5 and therefore the insertion of the bolt 4.

The lever system 7 comprises a sort of elongated slider 13, which is guided slidingly along the bottom 8 of the box-like seat 3 and is provided in a downward region with means 14 for guiding the sliding of the bolt 4 and for the abutment of the elastic means 6. The slider 13 is articulated in an upward region, about a first horizontal axis A formed by a first pivot 15, to an end of a lever 16 for the manual actuation of the device. The lever 16 is in turn articulated, substantially in a central position and on a second horizontal axis B formed by a second pivot 17, to the end of an arm 18 that is pivoted, at its opposite end, to the box-like seat 3 about a third horizontal axis C formed by a third pivot 19. With the lever system 7 in the upper stable fastening position, the second axis B is arranged between the bottom 8 of the box-like seat 3 and the plane Π on which the first and third axes A and C lie.

The lever 16 can therefore be turned manually from a first angular position, in which it is arranged substantially horizontally, to a second angular position, in which it is arranged vertically. The first angular position of the lever 16 corresponds to the upper release position of the bolt 4 (in which it is extracted from the pocket 5), while the second angular position corresponds to the lower locking position of the bolt 4, in which said bolt is inserted in the pocket 5.

When the actuation lever 16 is in the second vertical angular position, the lever system 7 is therefore in the upper stable fastening configuration, because the elastic means 6 apply, by the containing reaction of the bottom 8 of the box-like seat 3, an upward vertical action on the slider 13 which produces, due to the arrangement of the axes A, B and C, a torque which acts on the lever 16 and is suitable to keep it stably in said fastening configuration.

The bolt 4 has a lower portion 20 that is shaped substantially like a tapering tooth and is suitable to engage within the pocket 5; the lower portion 20 is crossed frontally by grooves 21 that reduce the surface of contact with the pocket 5 and therefore reduce friction during insertion. The bolt 4 also has an upper portion 22 that ends with a horizontal edge 23 and is laterally affected by two opposite lateral recesses 24, each of which forms respectively an upper abutment 25 and a lower abutment 26. In the central portion 27 of the bolt 4 there are a plurality of protrusions 28, which are preferably distributed along the sides.

The slider 13 has a substantially C-shaped transverse cross-section, in which the back can slide along the bottom 8 of the box-like seat 3 (in particular thanks to the presence of recessed portions 29 of the back, which constitute the sliding surfaces); opposite upper and lower longitudinal slots 31 and 32 for weight and friction reduction are provided on the side walls 30 of the slider. A cylindrical cross-member 33 is inserted in the lower slots 32, and its end faces are fixed along the sides 9 of the box-like seat 3; said cross-member acts as an upper and lower stroke limiter for the translational motion of the slider 13, respectively by engagement against the short transverse sides (the upper one and the lower one) of the lower slots 32. The slider 13 further has a flap 34 that is obtained by bending the back downward substantially at right angles and forms a surface for stopping the relative translational motion of the bolt 4 with respect to said slider 13.

The means 14 for guiding the sliding of the bolt 4 and for the abutment of the elastic means 6 comprise two opposite lower tabs 35, which are folded outward in a substantially U-like fashion and are suitable to engage, with their respective upper faces, against the upper abutments 25 of the bolt 4, so that said bolt can be moved from the lower position to the upper position, sliding out of the pocket 5.

The elastic means 6 are constituted by two helical cylindrical springs 36, which are respectively accommodated at the recesses 24 of the bolt 4, each spring having a lower end engaged on the lower abutment 26 and an upper end actuated by the lower face of the tab 35. The springs 36 are mounted with a compression preloading that is suitable to allow the substantially rigid sliding of the bolt 4 together with the slider 13 from the upper position to the lower position upon insertion in the pocket 5; the springs 36 are further suitable to ensure, during the insertion of said bolt 4, a compensation of the mechanical plays among all the components.

If, due to excessive friction or to the infiltration of dirt, the lower portion 20 of the bolt 4 jams inside the pocket 5, the springs 36 allow to absorb the downward action of the slider 13 induced by the manual rotation of the lever 16, avoiding excessive stresses or breakages; the flap 34, however, limits the compression of the springs 36, thus indicating an insufficient insertion of the bolt 4 in the pocket 5.

A profiled element 37 is fixed frontally on the box-like seat 3 of the locking device and constitutes the supporting structure of the stake 2; the profiled element runs from the lower portion 11 of said seat 3 to the top of the body from which it hangs and is able to slide longitudinally along a respective guide. The profiled element 37 has a transverse cross-section that is preferably substantially shaped like a letter C, in which the back has a recessed central band 38 that faces the bottom 8 of the seat 3 and has opposite wings 39 at its sides: the band 38 is suitable to act as a guiding abutment for the translational motion, along the seat 3, of the slider 13 and of the bolt 4 (in the specific case, contact between the bolt 4 and the central band 38 of the profiled element 37 occurs only on the protrusions 28, thus generating very limited friction resistances).

The central band 38 is affected frontally by a slot 40, which allows access to the actuation lever 16; there is also a recess 41 for inserting one's fingers between the free end of said lever 16 and the band 38. At the base of the profiled element there is a substantially rectangular cutout 42, which corresponds to the opening 12 provided in the box-like seat 3, in order to allow the passage of the pocket 5.

Operation of the locking device according to the invention is as follows: the stake 2, with the bolt 4 in the upper position and therefore with the actuation lever 16 in the first substantially horizontal angular position, is hung at the top of the body and therefore arranged so as to rest vertically on the chassis of the vehicle, so that the pocket 5 enters the cutout 42.

In order to lock the stake 2 with respect to the body, it is necessary to rotate the actuation lever 16 from the first horizontal angular position to the second vertical angular position; in this manner, the slider 13 is induced to slide downward, actuating, by means of the tabs 35, the upper ends of the springs 36, which by being preloaded appropriately are capable of transmitting a corresponding action to the lower abutments 26 of the bolt 4. The bolt 4 therefore moves from the upper position to the lower position, entering the pocket 5 and thus safely coupling the stake 2 to the body.

The lever system 7 therefore reaches the stable fastening configuration in which the second axis B is arranged between the bottom 8 of the box-like seat 3 and the plane Π on which the first axis A and the third axis C lie. If the bolt 4 is hindered by friction in its insertion in the pocket 5, the presence of the springs 36 allows a relative translational motion of the slider 13 with respect to the bolt 4: the maximum allowed stroke is determined by the distance between the edge 23 of the bolt and the flap 34 of the slider.

The device according to the invention ensures easy and effective locking of the stake 2 to the body, and the actuation lever 16 can assume a stable fastening position without the risk of spontaneous opening.

The absence of means for retaining the lever 16 in the fastening configuration allows to provide, at the front of the stake 2, a small slot 40 that prevents the deposition of dirt inside the device and does not interrupt the structural continuity of the profiled element 37.

It has thus been shown that the invention achieves the intended aim and objects.

The invention thus conceived is susceptible of numerous modifications and variations, all of which are within the scope of the appended claims.

All the details may further be replaced with other technically equivalent ones.

In practice, the materials used, as well as the shapes and the dimensions, may be any according to requirements without thereby abandoning the scope of the protection of the appended claims.

The disclosures in Italian Patent Application No. BO2002A000429 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A locking device for detachable stakes for supporting the canopy on the body of trucks, trailers or the like, which is rigidly coupled to the base of the stake (2) and comprises a bolt (4) that can slide vertically between a lower position for locking the stake (2) in which it is inserted in a respective pocket (5) that protrudes from the chassis of the vehicle and an upper release position in which it is extracted from said pocket (5) and allows the removal of said stake (2), **characterized in that** said bolt (4) is associated, with the interposition of elastic means (6), with a manually operated lever system (7) for the translational motion of said bolt (4) between said lower position and said upper position, said lever system (7) assuming, when said bolt (4) is in said lower position, a stable upper fastening configuration that is ensured by said elastic means (6).

2. The locking device according to claim 1, **characterized in that** said lever system (7) comprises a sort of elongated slider (13) that is guided so that it can slide vertically in a box-like seat (3), which is provided in a downward region with means (14) for guiding the longitudinal sliding of said bolt (4) and with abutments for said elastic means (6), and to which an end of an actuation lever (16) is articulated in an upward region about a first horizontal axis (A), said actuation lever having articulated thereto, in a central position, on a second horizontal axis (B), the end of an arm (18) whose other end is pivoted to said seat about a third horizontal axis (C), said second axis (B), when said lever system (7) is in said upper stable fastening configuration, arranging itself between the bottom (8) of said seat (3) and the plane (Π) on which said first and third axes (A, C) lie.

3. The locking device according to claims 1 and 2, **characterized in that** said lever (16) can be actuated so as to rotate manually from a first angular position, in which it is arranged substantially horizontally and which corresponds to said upper release position of said bolt (4), to a second angular position, which corresponds to said lower locking position of said bolt (4), in which it is arranged substantially vertically in said upper stable fastening configuration of said lever system (7), said elastic means (6) being adapted to apply in said upper configuration, by the containment reaction of said seat (3), an upward vertical action to said slider (13) which produces a torque that acts on said lever (16) and is adapted to keep it stably in said upper configuration.

4. The locking device according to one or more of the preceding claims, **characterized in that** said bolt (4) has a lower portion (20), which is shaped substantially like a tapering tooth and is suitable for insertion in said pocket (5), and an upper portion (22), which is affected laterally by two opposite longitudinal recesses (24), each of which forms respectively an upper abutment (25) and a lower abutment (26).

5. The locking device according to one or more of the preceding claims, **characterized in that** said elongated slider (13) has a substantially C-shaped transverse cross-section, in which the back can slide along the bottom (8) of said seat (3), said guiding and abutment means (14) being constituted by two opposite lower tabs (35) which are substantially folded in a U-like shape and are adapted to engage, with their respective upper faces, against said upper abutments (25) so as to move said bolt (4) from said lower position to said upper position.

6. The locking device according to one or more of the preceding claims, **characterized in that** said elastic means (6) are constituted by two helical springs (36), which are respectively accommodated at said recesses (24), each spring having a lower end that abuts against said lower abutment (26) and an upper end that is actuated by the lower face of said tab (35), said springs (36) being mounted with a preloading that allows the translational motion of said bolt (4) from said upper position to said lower position and being further adapted to ensure an effect of compensation of the plays between the components during the insertion of said bolt (4) in said pocket (5).

7. The locking device according to one or more of the preceding claims, **characterized in that** a profiled element (37) is fixed frontally on said box-like seat (3), constitutes the load-bearing structure of said stake (2), and has a substantially C-shaped transverse cross-section, in which the back has a recessed central band (38) that faces the bottom (8) of said seat (3) and is adapted to act as a guiding abutment for the translational motion of said slider (13) and of said bolt (4).
